# EUROPÄISCHE PATENTANMELDUNG

(11) **EP 0 911 604 A2**
(43) Veröffentlichungstag der Anmeldung: **28.04.1999**
(21) Anmeldenummer: 98119900.3
(22) Anmeldetag: 21.10.1998
(51) Int. Cl.: G01B 13/16

(54) **Prüfeinrichtung für Langprofile, insbesondere durch Extrusion hergestellte Langprofile**

(30) Priorität: 24.10.1997 DE 19746966
(71) Anmelder: FRIEDRICH THEYSOHN GmbH, D-30853 Langenhagen (DE)
(72) Erfinder: Marder, Hubertus, 36179 Bebra (DE)
(74) Vertreter: Cohausz & Florack

(57) **Zusammenfassung**

Die Erfindung betrifft eine Prüfeinrichtung für Langprofile, insbesondere durch Extrusion hergestellte Langprofile. Das Langprofil wird durch ein Kaliber (K*) bewegt, das im Querschnitt dem Langprofil entspricht. Zumindest an kritischen Bereichen des Kalibers (K*) sind an Saugquellen (13,14) mit Drucksensoren (17,18) angeschlossene Öffnungen (9,10) vorgesehen, die in Abhängigkeit von der Maßhaltigkeit des Langprofils mehr oder weniger stark abgedeckt werden. Die Drucksensoren (17,18) zeigen dann an, wo das Langprofil nicht maßhaltig ist.

## Beschreibung

Bei der kontinuierlichen Fertigung von Langprofilen, insbesondere durch Extrusion, kommt es immer wieder vor, daß das Langprofil nicht maßhaltig ist. Vor allem bei komplizierten Profilen, wie Fensterprofilen, können Kanten und Stege fehlen. Es kommt aber auch vor, daß das Profil insgesamt Über- oder Untermaß hat. Die Ursachen für diese mangelnde Maßhaltigkeit sind vielfältig. In jedem Fall ist es für den Herstellungsprozeß wichtig, ob das hergestellte Langprodukt fehlerbehaftet ist, weil dann fehlerbehaftete Längen herausgeschnitten werden können oder, in Abhängigkeit von der Art des Fehlers, in den Fertigungsprozeß eingegriffen werden kann.

Neben dieser Prüfung von Hand gibt es im Stand der Technik auch Einrichtungen, die in Laufrichtung der Langprofile stationär angeordnet sind aber Querbewegungen mitmachen können. Diese Einrichtungen können mit optoelektronischen Fühlern ausgestattet sein. Mit solchen Fühlern lassen sich jedoch komplizierte Profile, insbesondere die Zuordnung von Profilteilen zueinander, nicht in zufriedenstellender Weise kontrollieren (DE 34 40 943 A1, Seite 6, Absatz 2).

Es ist auch bekannt, anstelle der optoelektronischen Einrichtungen Meßtaster einzusetzen, die körperlich das Profil abtasten. Es versteht sich, daß solche Meßtaster nur im beschränkten Umfang in der Lage sind, ein kompliziertes Profil vollständig auf Maßgenauigkeit zu erfassen (DE 34 40 943 A1, Seite 7 ff).

Der Erfindung liegt die Aufgabe zugrunde, eine einfache Prüfeinrichtung für insbesondere extrudierte Langprofile zu schaffen, mit der möglichst frühzeitig im Herstellungsprozeß des Langproduktes Unregelmäßigkeiten in der Maßhaltigkeit festgestellt werden können.

Diese Aufgabe wird mit einer Prüfeinrichtung für Langprofile, insbesondere durch Extrusion hergestellte Langprofile gelöst, die aus einem, dem Langprofil zumindest in den zu prüfenden Bereichen entsprechenden Kaliber mit in seinen den zu prüfenden Bereichen zugewandten Innenseiten vorgesehenen und somit von diesen Bereichen entsprechend ihrer Maßhaltigkeit mehr oder weniger stark abgedeckten Öffnungen, die an Druck- und/oder Saugleitungen einer Druck- und/oder Saugquelle für ein gasförmiges Medium oder flüssiges Medium angeschlossen sind, und mit Sensoren für die Überwachung des Druckes oder Unterdruckes an den verschiedenen Öffnungen besteht.

Bei der Erfindung wird die Maßhaltigkeit des Profils im ganzen oder in besonders kritischen Bereichen auf einfache Art und Weise über die Überwachung des das Langprofil im Kaliber beaufschlagenden Druckes kontrolliert. Das Kaliber sollte gegenüber dem Sollmaß des Langprofils ein geringes Übermaß haben, damit auch Querschnittsvergrößerungen des Profils erfaßt werden können, ohne daß es zum Verklemmen des Langprofils im Kaliber kommt. Obgleich es nach der Erfindung möglich ist, die Maßhaltigkeit des Kalibers insgesamt zu erfassen, wird eine differenzierte Erfassung des Druckes einzelner Bereiche bevorzugt, um gezielt auf Unregelmäßigkeiten in der Maßhaltigkeit beim Produktionsprozeß, zum Beispiel durch Veränderung des Massendurchsatzes und/oder Änderung der Kühlintensität reagieren zu können. Auch läßt sich in Abhängigkeit von der Größe des Druckes eine Aussage über das Ausmaß der mangelnden Maßhaltigkeit an den einzelnen Orten des Kalibers machen.

Die Meßergebnisse können nicht nur zur unmittelbaren Steuerung des Produktionsprozesses eines Extruders verwendet werden, sondern auch zur Steuerung einer nachgeschalteten Säge, um fehlerhafte Profillängen herauszuschneiden. Außerdem können die Meßergebnisse auch optisch oder akustisch angezeigt werden, damit die Bedienungsperson auf solche Fehler aufmerksam wird und in den Produktionsprozeß eingreifen kann.

Im folgenden wird die Erfindung anhand einer ein Ausführungsbeispiel darstellenden Zeichnung näher erläutert. Im einzelnen zeigen:
- Figur 1: eine Prüfeinrichtung für extrudierte Langprofile in schematischer Darstellung
**und**
- Figur 2: ein Kaliber für ein winkliges Langprofil in isometrischer Darstellung.

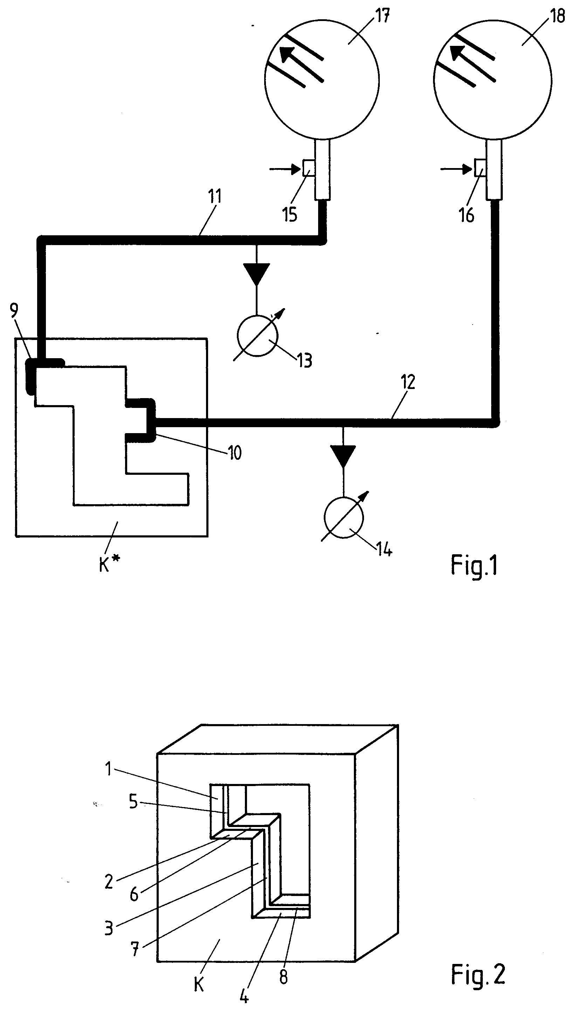

Bei dem in Figur 2 dargestellten Kaliber K sind in jeder dem Langprofil zugekehrten Innenseite 1,2,3,4 Schlitze 5,6,7,8 vorgesehen. Anstelle solcher ineinander übergehender Schlitze 5,6,7,8 können auch voneinander unabhängige Schlitze vorgesehen sein. Das Kaliber K hat ein geringes Übermaß gegenüber dem Sollmaß des Langprofils, damit das Langprofil bei einem im Bereich des Übermaßes des Kalibers liegenden Übermaß noch ohne Klemmen das Kaliber K passieren kann.

In Figur 1 ist ein Kaliber K* für ein etwas anderes Profil dargestellt. Bei diesem Kaliber sind nur in erfahrungsgemäß kritischen Bereichen Schlitze 9,10 vorgesehen. An diesen Schlitzen liegt Unter- oder Überdruck an. Dazu sind die Schlitze 9,10 über Leitungen 11,12 mit Druck- oder Saugquellen 13,14 verbunden. Über einen Bypass 15,16 kann der Druck eingestellt werden. An den Saug- oder Druckleitungen 11,12 sind ferner Druckanzeigen 17,18 bzw. Signalgeber angeschlossen. Anstelle einer Beaufschlagung der Schlitze 9,10 mit Druck oder Unterdruck können die Schlitze auch mit einem flüssigen Medium beaufschlagt werden.

Die Funktionsweise der Prüfeinrichtung ist folgende:
Sofern sich im Kaliber K* ein Langprofil befindet, das den Sollabmessungen entspricht, sind die Schlitze 9,10 bis auf einen minimalen Spalt abgedeckt. Deshalb wird nur wenig Luft an den Schlitzen 9,10 ausgeblasen oder angesaugt. Sofern jedoch zum Beispiel an dem Schlitz 10 ein Teil des Profils fehlt, kann über den Schlitz 10 viel Luft angesogen werden. Das führt zu einem Druckabfall. Die Anzeige bzw. der Signalgeber 18 zeigt dies an oder gibt ein Signal zur Steuerung des Produktionsprozesses.

In entsprechender Weise wird auch ein Untermaß oder Übermaß des Langproduktes angezeigt, weil bei einem Übermaß die Schlitze stärker als normal abgedeckt werden und bei einem Untermaß die Schlitze weniger als normal abgedeckt werden. Mit der erfindungsgemäßen Prüfeinrichtung ist es somit möglich, auf einfache Art und Weise Unregelmäßigkeiten in den Abmessungen des Langprofils festzustellen.

## Patentansprüche

1. Prüfeinrichtung für Langprofile, insbesondere durch Extrusion hergestellte Langprofile, bestehend aus einem dem Langprofil zumindest in den zu prüfenden Bereichen entsprechenden Kaliber (K,K*) mit in seinen den zu prüfenden Bereichen zugewandten Innenseiten (1,2,3,4) vorgesehenen und somit von diesen Bereichen entsprechend ihrer Maßhaltigkeit mehr oder weniger stark abgedeckten Öffnungen (5,6,7,8,9,10), die an Druck- und/oder Saugleitungen (11,12) einer Druck- und/oder Saugquelle (13,14) angeschlossen sind und mit Sensoren (17,18) für die Überwachung des Druckes oder Unterdruckes an den verschiedenen Öffnungen (9,10).
